# EUROPEAN PATENT APPLICATION

(11) **EP 1 211 377 A2**
(43) Date of publication of application: **05.06.2002**
(21) Application number: 01128613.5
(22) Date of filing: 30.11.2001
(51) Int. Cl.: E06B 3/66

(54) **Glass panel and its method of manufacturing**

(30) Priority: 01.12.2000 JP 2000367039; 21.11.2001 JP 2001356063
(71) Applicant: Nippon Sheet Glass Co., Ltd., Osaka-shi, Osaka (JP)
(72) Inventor: Domi, Shinjiro, 4-chome, Chuo-ku, Osaka (JP); Sakaguchi, Koichi, 4-chome, Chuo-ku, Osaka (JP); Nakagaki, Shigeki, 4-chome, Chuo-ku, Osaka (JP); Futagami, Toru, 4-chome, Chuo-ku, Osaka (JP)
(74) Representative: Kaiser, Magnus, Dipl.-Phys.

(57) **Abstract**

A glass panel (P) includes a pair of glass sheets (1A, 1B) opposed to each other with a predetermined gap (V) therebetween and having peripheral edges thereof bonded with a metal material (5) to seal the gap (V) air-tightly. The glass sheets (1A, 1B) are disposed relative to each other with a displacement of 2 mm or less in maximum at respective corresponding end faces thereof along the glass panel surface (P).

## Description

### BACKGROUND OF THE INVENTION

### 1. FIELD OF THE INVENTION

The present invention relates to a glass panel including a pair of glass sheets opposed to each other with a predetermined gap therebetween and having peripheral edges thereof bonded with a metal material to seal the gap air-tightly. The invention relates also to a method of manufacturing the glass panel.

### 2. DESCRIPTION OF THE RELATED ART

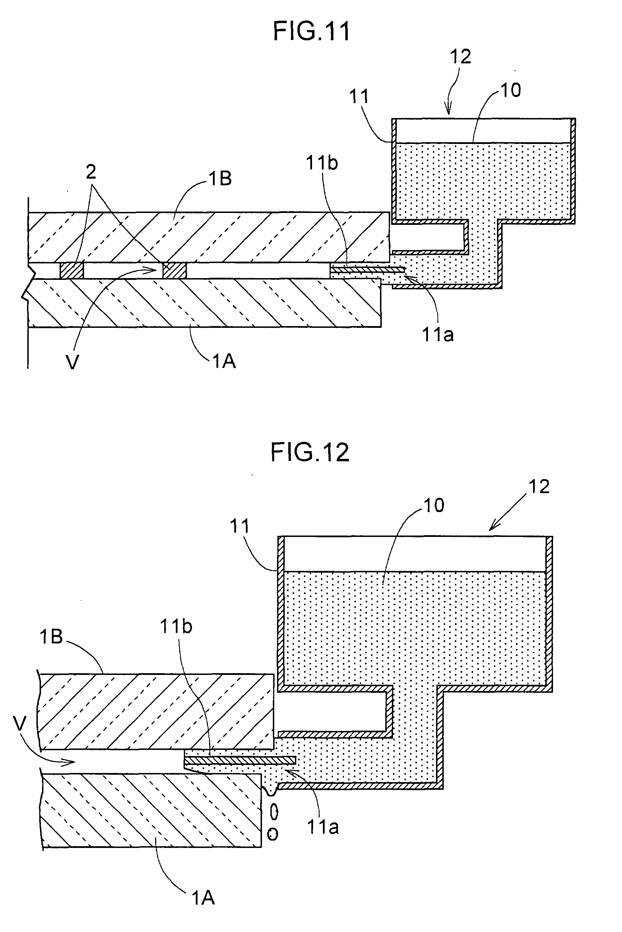

A conventional glass panel of the above type is shown in Fig. 11. As shown, the glass panel includes a pair of glass sheets 1A, 1B which are disposed in vertical opposition to each other in a spaced relationship with a gap V therebetween. Metal solder 10 is charged between the peripheral edges of these glass sheets 1A, 1B, so that upon solidification of the metal solder 10, the glass sheets 1A, 1B are directly bonded to each other, thus forming an air-tight glass panel (see international publication WO 00/58234 for example).

For the charging operation of the metal solder 10, a charger device 12 is shown which device is also shown in Fig. 11. This charger device 12 includes a reservoir 11 capable of reserving the metal solder 10 under a molten state by heating it. At the bottom of the reservoir 11, there is formed a discharge opening 11a for discharging the molten metal solder 10. The discharge device 12 further includes a guide plate 12 which extends from a position located inside the discharge opening 11a to a leading end projecting out of the opening. This guide plate 11b serves to guide the molten metal solder 10 discharged horizontally from the discharge opening 11a into and along the gap V between the opposed glass sheets 1A, 1B.

Specifically, the discharging operation of the metal solder 11 proceeds in the following manner. As illustrated in Fig. 11, first, while the charger device 12 is set with the leading end of the guide plate 11b being positioned within the gap V, the molten metal solder 10 inside the reservoir 11 is discharged from the discharge opening 11a. Thus, the molten metal solder 10 is advanced along the guide plate 11b into the gap V and fills the gap V. And, by effecting the charging operation of the molten metal solder 10 along the entire peripheries of the glass sheets 1A, 1B while moving the charger device 12 along the sides of the glass sheets 1A, 1B, the bonding and sealing of the opposed glass sheets 1A, 1B is realized.

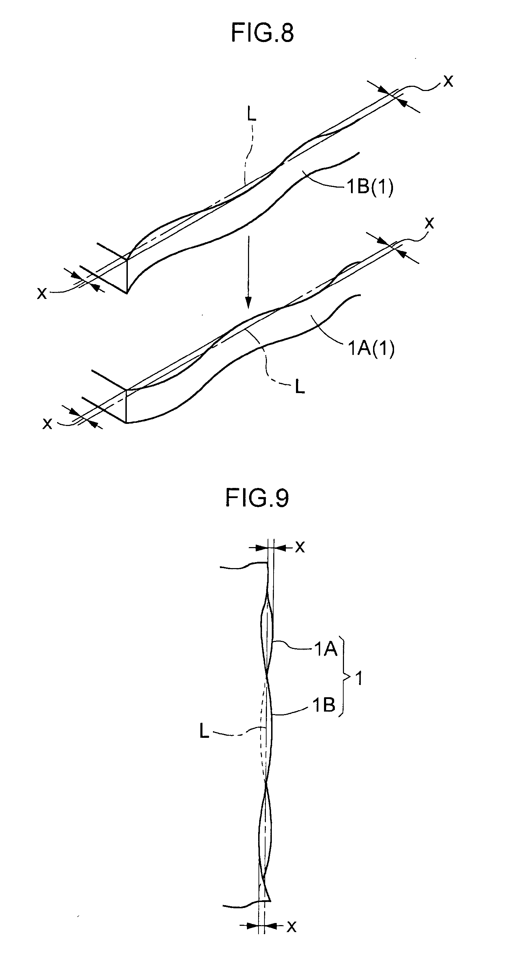

With the conventional glass panel and its manufacturing method described above, for example, as shown in Fig. 8, the following problem occurs in case the upper glass sheet projects relative to the lower glass sheet in the form of eaves. That is, the projecting upper glass sheet 1B limits the position that the charger device 12 can assume. Therefore, it is difficult for the charger device 12 to approach the gap between the glass sheets sufficiently. As a result, there remains a space between the discharge opening 11a of the charger device 12 and the gap V and through this space, the molten metal solder 10 tends to fall off, leading to a significant loss of the metal solder material. Also, the charging amount to the gap tends to be insufficient also, tending to result in reduction in the bonding condition between the glass sheets.

Accordingly, an object of the present invention is to solve the above-described problem by providing a glass panel which allows reduction in the loss of the metal material used for bonding between the glass sheets and its manufacturing method.

### SUMMARY OF THE INVENTION

For accomplishing the above-noted object, a glass panel according to a characterizing feature of the present invention relating to claim1, a glass panel including a pair of glass sheets opposed to each other with a predetermined gap therebetween and having peripheral edges thereof bonded with a metal material to seal the gap air-tightly,
characterized in that
the glass sheets are disposed relative to each other with a displacement of 2 mm or less in maximum at respective corresponding end faces thereof along the glass panel surface.

With the construction relating to claim 1 described above, since the displacement at the respective corresponding end faces of the glass sheets along the glass panel surface is 2 mm or less, when the glass sheets are being bonded with the metal material under its molten state being disposed therebetween, it is easy to avoid the leak of the molten metal material from the space between the charger device and the glass sheet gap which leak would tend to occur with the prior art, so that the loss of the metal material may be reduced. As a result, the manufacture cost of the glass panel may be reduced advantageously. Further, since the distance between the charger device for molten metal and the glass sheet gap is not greater than 2 mm even at its maximum, bonding failure or defect which would occur in the case of a great distance therebetween can be avoided also. And, it becomes possible to properly maintain the charging amount of the molten metal material into the glass sheet gap, hence, favorable bonding condition between the glass sheets.

According to the feature of the invention relating to claim 2, one of the pair of glass sheets has a dimension greater by 2 mm or less in maximum than the other glass sheet in both the length and width thereof, and the glass sheets are disposed with an outer edge of the one glass sheet being located in alignment with or outside an outer edge of the other glass sheet.

With this arrangement, when the two glass sheets are to be bonded to each other with the molten metal material being interposed therebetween, at each and every side of the glass sheets, the outer edges thereof are located in alignment with each other, or with one of them being disposed outside the other. Hence, it become even easier to avoid leakage of the molten metal material from the space between the charger device and the glass sheet gap, thus further reducing the loss of the metal material. As a result, the manufacture costs of the glass panel may be further reduced. Further, since the distance between the charger device for the molten metal and the glass sheet gap is 2 mm or less even in maximum, the bonding defect or failure due to too great distance therebetween may be avoided and the charging amount of the molten metal material into the glass sheet gap may be maintained appropriate, thus ensuring good bonding condition.

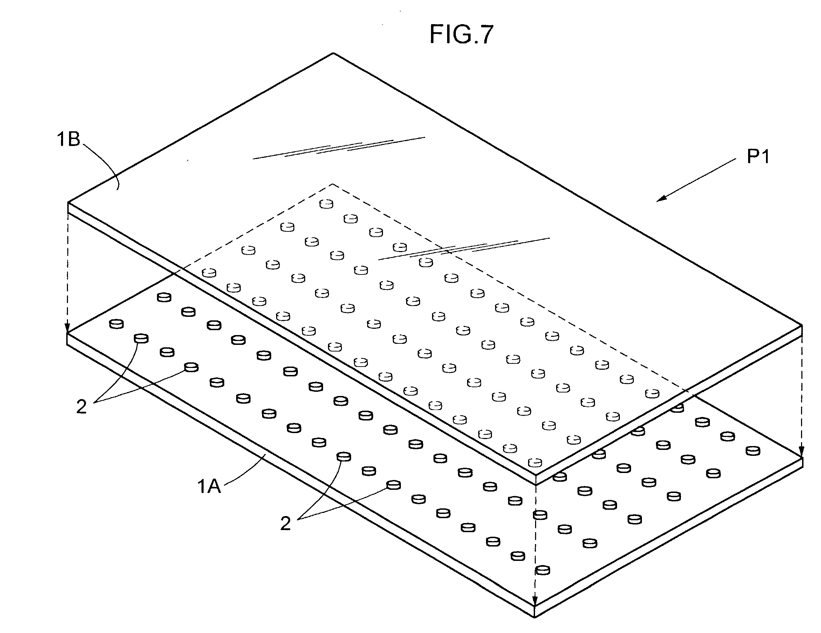

According to the further feature of the invention relating to claim 3, as shown in Figs. 7 and 8, the two glass sheets are of substantially same shape and same dimensions, with a projection amount at the respective outer edges thereof relative to a reference line being within ± 1mm and the two glass sheets are disposed with the respective outer edges thereof being substantially aligned with each other.

With this feature of the invention, the two glass sheets are of substantially same shape and same dimensions and are arranged with the outer edges thereof being in substantial alignment. When the two glass sheets are to be bonded to each other with the molten metal material therebetween, by disposing one glass sheet downwardly of the other glass sheet, the outer edges of the glass sheets will be substantially aligned with each other in all sides thereof. Accordingly, it becomes easy to prevent the molten metal material from being leaked from the gap between the glass sheets, whereby loss of the metal material may be reduced. As a result, the manufacture costs of the glass panel may be reduced correspondingly.

Further, as the projection amount at the respective outer edges thereof relative to a reference line is set within ± 1mm, the displacement, even at its maximum, between the outer peripheral edges of the two glass sheets is 2 mm or less. Hence, the distance between the charger for the molten metal material and the glass sheet gap becomes about 2 mm or less. Therefore, it becomes possible to avoid bonding failure due to an excessive distance therebetween. And, the amount of the molten metal material charged between the glass sheet gap may be maintained at a proper level and a favorable bonding performance may be assured.

According to a method of manufacturing glass panel relating to claim 4, the method includes steps of disposing a pair of glass sheets in vertical opposition to each other with a predetermined gap therebetween and directly bonding peripheral edges of the glass sheets with molten metal material for sealing the gap air-tight;
characterized in that
the bonding step is effected so that the glass sheets are bonded at the peripheral edges thereof with a displacement of 2 mm or less relative to each other at the respective corresponding end faces

With this construction, the peripheral edges are bonded with a displacement of 2 mm or less relative to each other at the respective end faces. Therefore, it is easy to avoid the leak of the molten metal material from the space between the charger device and the glass sheet gap which leak would tend to occur with the prior art, so that the loss of the metal material may be reduced. As a result, the manufacture cost of the glass panel may be reduced advantageously. Further, since the distance between the charger device for molten metal and the glass sheet gap is not greater than 2 mm even at its maximum, bonding failure or defect which would occur in the case of a great distance therebetween can be avoided also. And, it becomes possible to properly maintain the charging amount of the molten metal material into the glass sheet gap, hence, favorable bonding condition between the glass sheets.

Further, according to the method of manufacturing a glass panel relating to claim 5, the method further comprises the step of providing the two glass sheets so that one of the glass sheets has a dimension greater by 2 mm or less in maximum than the other glass sheet in both the length and width thereof, and the disposing step is effected such that the glass sheets are disposed with an outer edge of the lower glass sheet being located in alignment with or outside an outer edge of the upper glass sheet.

With this construction, the glass sheets are prepared such that one of them has a dimension greater by 2 mm or less in maximum than the other in both the length and width thereof. Then, these'glass sheets are disposed in such a manner that the outer edge of the lower glass sheet is located in alignment with or outside that of the upper glass sheet. Hence, it become even easier to avoid leakage of the molten metal material from the space between the charger device and the glass sheet gap, thus further reducing the loss of the metal material. As a result, the manufacture costs of the glass panel may be further reduced. Further, since the distance between the charger device for the molten metal and the glass sheet gap is 2 mm or less even in maximum, the bonding defect or failure due to too great distance therebetween may be avoided and the charging amount of the molten metal material into the glass sheet gap may be maintained appropriate, thus ensuring good bonding condition.

Further, according to the method of manufacturing a glass panel relating to claim 6, the method comprises the further steps of:
preparing the two glass sheets with substantially same shape and same dimensions; and
disposing the two glass sheets disposed with the respective outer edges thereof being substantially aligned with each other with a projection amount at the respective outer edges thereof relative to a reference line being within ±1mm.

With the above feature, the two glass sheets are prepared with substantially same shape and same dimensions and are arranged with the outer edges thereof being in substantial alignment. When the two glass sheets are to be bonded to each other with the molten metal material therebetween, by disposing one glass sheet downwardly of the other glass sheet, the outer edges of the glass sheets will be substantially aligned with each other in all sides thereof. Accordingly, it becomes easy to prevent the molten metal material from being leaked from the gap between the glass sheets, whereby loss of the metal material may be reduced. As a result, the manufacture costs of the glass panel may be reduced correspondingly.

Further, as the projection amount at the respective outer edges thereof relative to a reference line is set within ± 1mm, the displacement, even at its maximum, between the outer peripheral edges of the two glass sheets is 2 mm or less. Hence, the distance between the charger for the molten metal material and the glass sheet gap becomes about 2 mm or less if the charger is placed as closely as possible to the edge of the glass panel. Therefore, it becomes possible to avoid bonding failure due to an excessive distance therebetween. And, the amount of the molten metal material charged between the glass sheet gap may be maintained at a proper level and a favorable bonding performance may be assured.

Further and other features and advantages of the invention will become apparent upon reading detailed description of the preferred embodiments thereof with reference to the accompanying drawings.

### BRIEF DESCRIPTION OF THE DRAWINGS

Fig. 1 is a partially cutaway perspective view showing a glass panel according to the present invention,
Fig. 2 is a section view of the glass panel shown in Fig. 1,
Fig. 3 is an exploded perspective view illustrating one step of manufacturing the glass panel,
Fig. 4 is a section view illustrating another step of manufacturing the glass panel,
Fig. 5 is a plan view illustrating still another step of manufacturing the glass panel,
Fig. 6 is a plan view illustrating a method of manufacturing a glass panel according to a further embodiment,
Fig. 7 is an exploded perspective view illustrating a method of manufacturing a glass panel according to a still further embodiment,
Fig. 8 is a perspective view illustrating the method of manufacturing a glass panel according to the still further embodiment,
Fig. 9 is a plan view corresponding to Fig. 8,

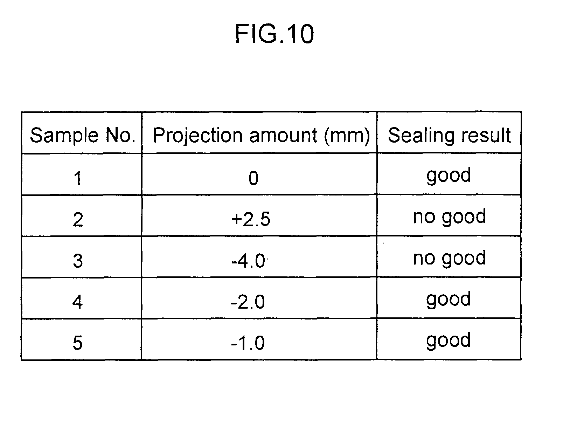

Fig. 10 is a table showing experiment results,
Fig. 11 is a section view of principal portions illustrating a conventional method of manufacturing a glass panel, and
Fig. 12 is a further section view of principal portions illustrating the conventional method of manufacturing a glass panel.

### DESCRIPTION OF THE PREFERRED EMBODIMENTS

Preferred embodiments of the present invention will be described next with reference to the accompanying drawings.

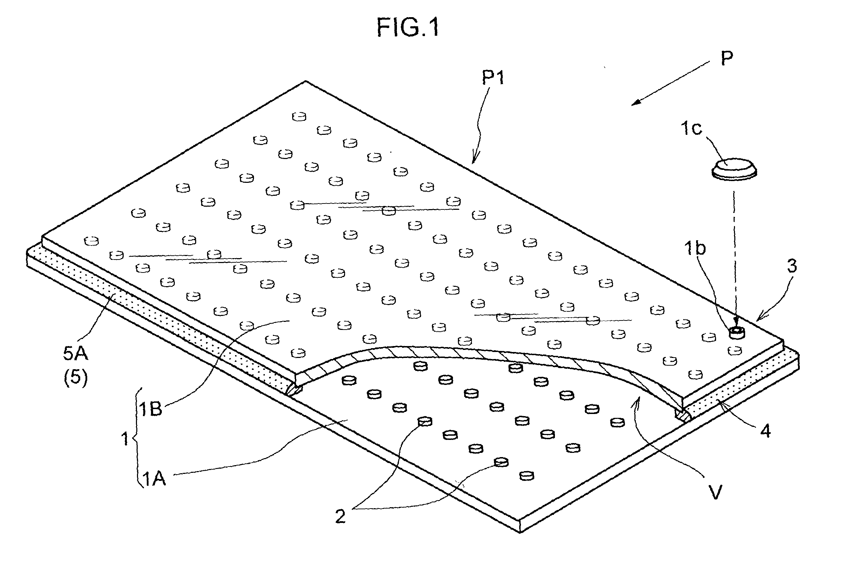

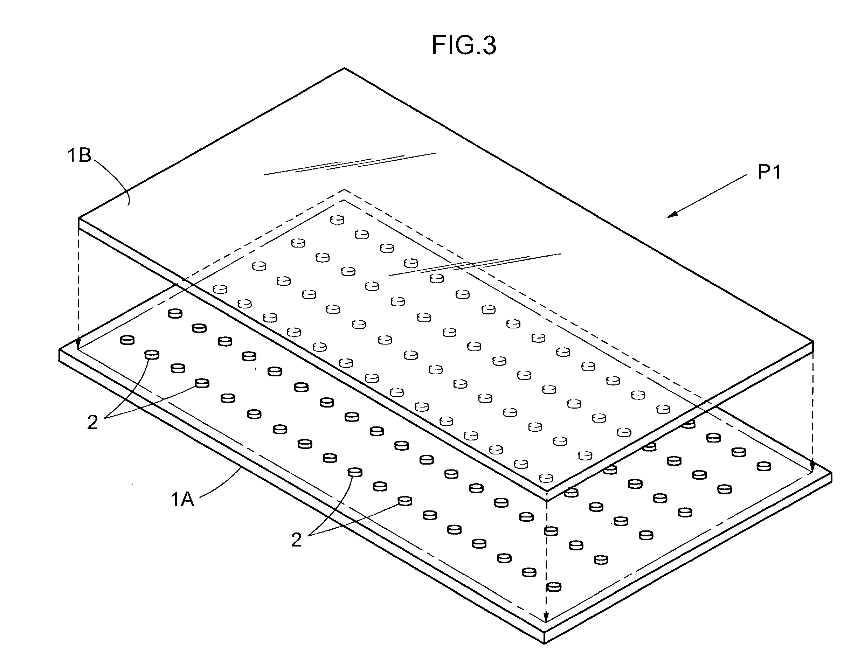

Figs. 1 and 3 show a glass panel according to one preferred embodiment of the present invention. The glass panel P as shown includes a pair of glass sheets 1A, 1B disposed in opposition to each other with a number of spacers 2 interposed therebetween so as for a predetermined gap V along the opposed sheet faces. Further, sealed portions 4 made of metal are formed along and between the outer peripheries of the opposed glass sheets 1A, 1B, and one 1A of the glass sheets 1A, 1B includes an evacuating portion 3 for evacuating and sealing the gap V. These components together constitute a glass panel body P1. The gap V formed inside the glass panel P is sealed after evacuating air from the evacuating portion 3.

Both of the glass sheets 1A, 1B are float glass sheets (each having a thickness in the range of 2.65 mm to 3.2 mm). Further, the one glass sheet 1A is sized to be greater than the other glass sheet 1B by 2 mm or less in both length and width thereof.

The glass panel P is assembled in such a manner that an outer edge of the lower glass sheet 1A is disposed in alignment with or outside an outer edge of the upper glass sheet 1B. Under this assembled condition, the displacement between the sides of the two glass sheets is set at respective corresponding portions thereof by 2 mm or less in maximum.

Preferably, the spacer 2 is formed of material having a compression strength of 490 MPa (5000kg/cm²) or greater. In the instant embodiment, these spacers 2 are made of Inconel alloy 718. If the strength is insufficient, the spacer 2 may be collapsed under the atmospheric pressure acting on the glass sheets 1, thus destroying the gap V. Or, the glass sheets may come into direct contact with each other, resulting in reduction in the heat insulating performance of the glass panel or even breakage of the glass sheets.

Further, each spacer 2 is shaped as a cylindrical element having dimensions of a diameter of 0.3 mm to 1.0 mm and a height of 0.2 mm. The cylindrical shape of the spacer 2 is advantageous in that it can avoid formation of an angular portion at its portion contacting each glass sheet and it can also disperse stress applied from the spacer 2 to each glass sheet 1, thereby restrict occurrence of breakage of the glass sheets 1. These spacers 2 are arranged with a spacing of about 20 mm in both vertical and lateral directions along the glass sheet surfaces.

The outer periphery sealed portion 4 of the glass panel P is made of a solder material 5A (an example of "metal material 5") for integrally bonding the outer peripheral edges of the two glass sheets 1A, 1B together, so as to seal the gap V air-tight.

More particularly, the gap V is set under a depressurized condition (0.13 Pa (1.0 x 10⁻³ Torr) or less) by means of an evacuating operation through the evacuating portion 3.

Next, the composition of the solder material 5A will be described.

This solder material 5A includes such components as Sn, Zn, Ti, O and so on. In this embodiment, the material includes Ti by 0.001 to 3.0%, Sn by 72 to 99.9%, Zn by 0.1 to 10.0%. The material may include Pb not exceeding 0.1%, but preferably substantially no Pb at all. In addition to the above-cited components, the material may further include other additional components such as In, Ag, Bi and Sb by appropriate proportions if necessary for the following reasons.

The element In if added serves to lower the melting point of the solder material and also to soften the solder material per se, thus improving wettability thereof. If the addition amount of In is below 0.1%, its effect is too small. On the other hand, if the amount exceeds 50%, this will make it difficult to assure sufficient strength of the solder material per se, and will also result in significant cost increase.

The element Ag if added serves to improve the mechanical strength of the solder material. If its addition amount is blow 0.1%, its effect is too small. On the other hand, if the amount exceeds 6%, this will result in increase in the melting point of the solder material as well as in formation of a large amount of intermetallic compound with Sn, thus leading to reduction in the mechanical strength on the contrary. Therefore, the preferred range of its addition amount is 0.1 to 3.5%.

As for the elements Bi and Sb, one or both of them may be added appropriately in a range of 10% or lower. The element Bi serves to improve the wettability of the solder material. This also improves the finished appearance of the soldering and also increase the creep resistance of the solder material advantageously. In addition to the above components, other elements such as Fe, Ni, Co, Ga, Ge, P etc may each be added by a trace amount if appropriate in order to obtain further advantages of realizing lead-free composition and increase in the soldering wettability and mechanical strength.

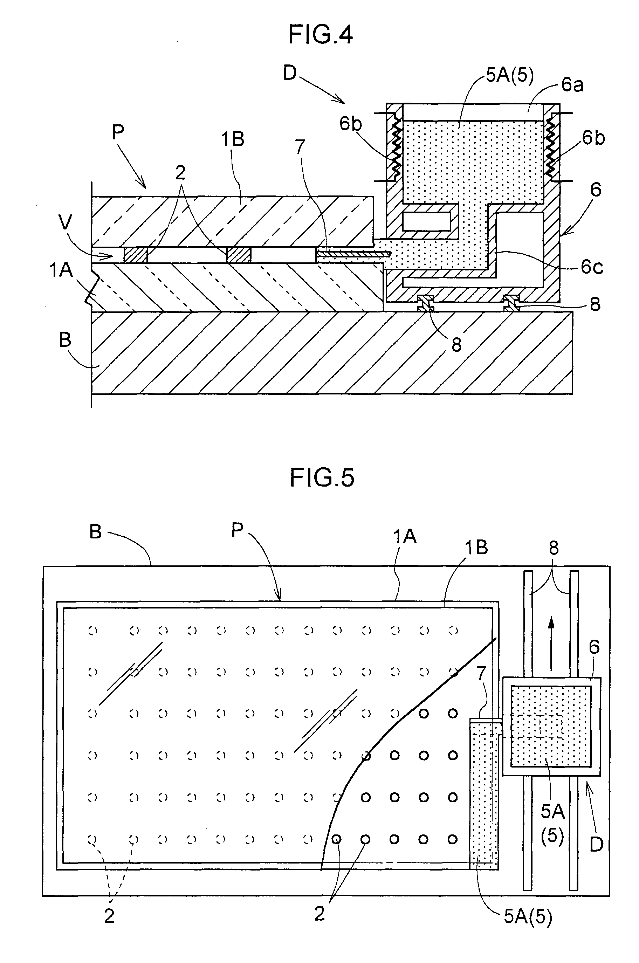

The solder material 5A described above is charged into the gap V between the opposed glass sheets 1 by means of a charger device D shown in Figs. 4 and 5.

The charger device D includes a supply tower 6 mounted on a glass panel assembling mount B. The supply tower 6 includes a melting pot portion 6a for reserving the solder material 5A under a molten or un-molten condition thereof, an electric heater 6b for heating or heat-reserving the melting pot portion 6a and a guide passage 6c extending first downwardly from the bottom of the melting pot portion 6a and then extending laterally. From an exit opening of the guide passage 6c, a flat guide plate 7 is projected. This guide plate 7 is very thin (0.1 mm thickness) and elongate in the width thereof. Further, the supply tower 6 is mounted on a pair of rails 8, 8 disposed on the glass-panel assembling mount B to be movable thereon.

The guide plate 7 is attached at the center of the exit opening of the guide passage 6c, so that the molten solder material 5A present inside the melting pot portion 6 and the guide passage 6c may be drawn along both upper and lower surfaces of the guide plate 7 to be charged into the gap between the glass sheets.

Then, with the guide plate 7 being inserted into the gap V of the opposed glass sheets 1, as the supply tower 6 is moved on the rails 8 along the peripheral edge of the glass panel body P1, the solder material5A is charged along and over the entire length of the glass sheets 1, whereby the glass sheets 1 are bonded directly with each other.

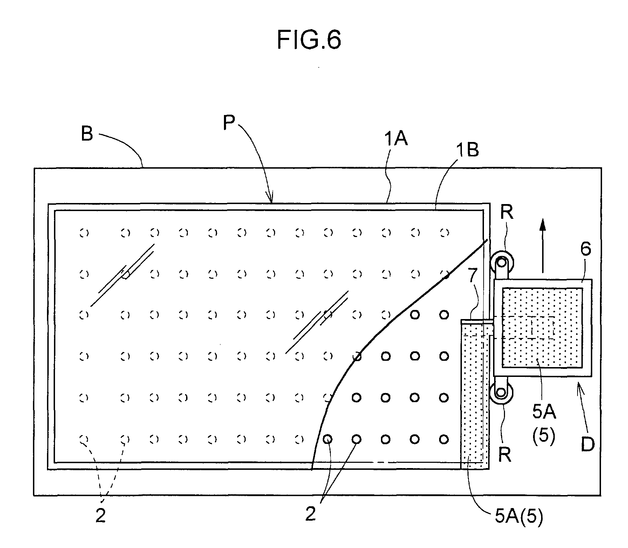

Fig. 6 shows a further embodiment of the charger device. This charger device D is adapted to slide directly on the glass-panel assembling mount B, rather than sliding on the rails 8 as in the foregoing embodiment. Further, instead of the rails 8, there are provided tracer tools R comprising a pair of free rollers at the lower region of the supply tower 6.

The pair of tracer tools R are adapted to come into contact with the outer peripheral face of either one of the two glass sheets 1A, 1B, preferably, the lower glass sheet 1A having the greater vertical and width dimensions. In operation, as the pair of tracer tools R are kept under pressed contact against the outer peripheral face of the one glass sheet 1A, the charger device D' slides on the glass-panel assembling mount B.

With use of such tracer tools R, the opening of the guide passage 6c of the supply tower 6 is caused to move along the outer peripheral face of e.g. the one glass sheet 1A in a reliable manner, so that the charging operation of the solder material 5A may take place smoothly and reliably.

The rest of the construction is not particularly different from that of the charger D of the foregoing embodiment. Therefore, further description will be omitted, with the same reference marks being provided as in the foregoing embodiment.

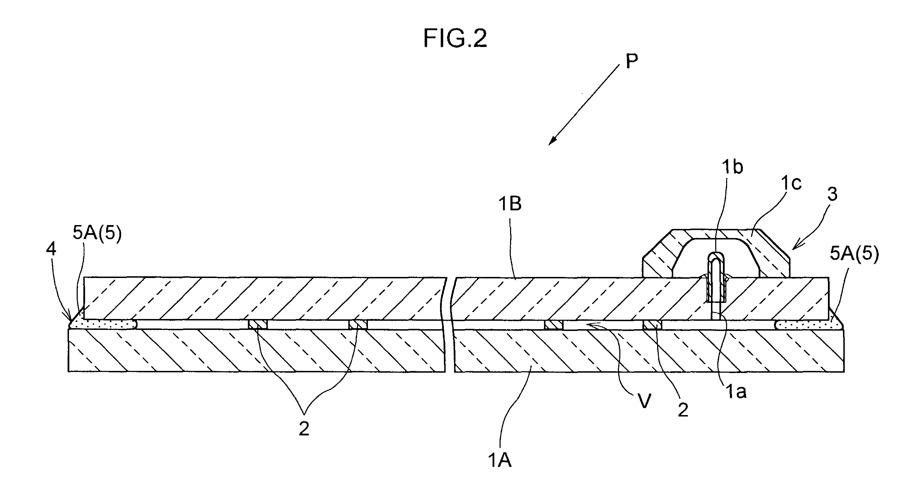

The evacuating portion 3 of the glass panel P, as shown in Fig. 2, includes an evacuating opening 1a formed in the upper glass sheet 1B, an evacuating glass tube 1b fixed to the evacuating opening 1a and a cap 1c for covering the evacuating opening 1a and the glass tube 1b and their peripheries from the above. In operation, after evacuating gas from the gap V through the glass tube 1b, the leading end of the glass tube 1b is heated and fused to be sealed. Then, the cap 1c is fitted thereon. With these, the evacuating portion 3 is formed.

Next, the main steps of manufacturing the glass panel P will be specifically described.
[1] First, the pair of glass sheets 1 are cut into predetermined dimensions. Specifically, the glass sheets 1 are cut so that the one glass sheet 1A is greater by 2 mm or less than the other glass sheet 1B in both the length and width thereof.
[2] Then, the one glass sheet 1A having the larger length and width is placed on the glass-panel assembling mount B and the number of spacers 2 are disposed thereon at predetermined positions. After this, the other glass sheet 1B is overlapped on the one glass sheet 1A via the spacers 2.
   In doing the above, as illustrated in Fig. 3, the glass sheets are set so that an outer edge of the one glass sheet 1A may be located in alignment with or outside an outer edge of the other glass sheet 1B. With this arrangement, it becomes possible to prevent the solder material 5A, when it is supplied from the charger device D, from falling off before it can reach the gap V.
[3] Thereafter, the guide plate 7 of the charger device D is inserted into the gap V of the glass sheets 1 and in the case of the charger device D shown in Figs. 4 and 5, this charger device D is set as closely as possible to the glass sheets 1. Whereas, in the case of the charger device D' shown in Fig. 6, the pair of tracer tools R are kept under pressed contact against the outer peripheral face of the one glass sheet 1A. Under this condition, the solder material 5A present in the melting pot portion 6a and the guide passage 6c is charged into the gap V.
   By moving the entire charger device D along each side of the glass sheets 1A, 1B at a fixed rate, the solder material 5A is charged along the sides of the glass sheets 1A, 1B over the entire lengths thereof, whereby the glass sheets 1 are bonded together.
[4] Then, by effecting the above step [3] for each side of the glass panel body P1, the outer periphery sealed portion 4 may be formed along the entire periphery of the four sides of the glass sheets 1A, 1B.
[5] Thereafter, by evacuating air or gas from the gap V through the evacuating portion 3 and then sealing the gap V under the evacuated condition, the glass panel P having high heat insulating performance is completed.

Figs. 7 and 8 illustrate a further embodiment of the glass panel of the invention. In order to avoid redundancy, the same members or members having the same functions as the glass panel P of the foregoing embodiment will be denoted with the same reference marks, with omitting description thereof. And, the differences therebetween will mainly be described next.

In the case of a glass panel P1 of this further embodiment, the one glass sheet 1A and the other glass sheet 1B both have a rectangular shape and having same vertical and lateral dimensions. That is, the two glass sheets 1A, 1B are of a same shape and same dimensions.

And, as illustrated in Fig. 8, the projection amount at the outer edges of the two glass sheets 1A, 1B relative to the reference lines L of the vertical and lateral dimensions are both set within ± 1mm. And, the two glass sheets 1A, 1B are disposed with the respective outer edges thereof being in substantial alignment with each other. As a result, the displacement between the end faces of the two glass sheets 1A, 1B is 2 mm or less even at its maximum.

According to a manufacturing method of the glass panel P of this further embodiment, the two glass sheets 1A, 1B are prepared with the predetermined dimensions, that is, with the same shape and same dimensions. Further, the projection amount (x) relative to the respective reference lines L at the outer edges of the two glass sheets 1A, 1B is set within ± 1 mm.

Then, after displacing either glass sheet, e.g. the glass sheet 1A, on the glass-panel assembling mount B, the spacers 2 are mounted at the respective positions. Subsequently, the other glass sheet 1B is overlapped thereon, that is, so that the outer peripheral edges of the two glass sheets 1a, 1B are substantially in alignment with each other. Thereafter, by the same steps as [3] through [5], the glass panel P is formed.

In the glass panel P completed in the either case described above, the solder material 5A is charged reliably along the outer peripheries of the glass sheets 1 and the highly air-tight outer periphery sealed portion 4 is formed.

The preferred displacement amount which is provided in advance between the end faces of the upper and lower glass sheets 1A, 1B was obtained from an experiment described in an example below, based on the varied performances of the outer periphery sealed portion 4.

### [example]

In this experiment, glass panels P were manufactured with different displacement amounts between the end faces of the upper and lower glass sheets 1A, 1B. And, variations in time in the vacuum degree of the gap V of each of these glass panels P was determined.

A glass panel was judged as good if no change was observed after lapse of 28 days. Others with change in the vacuum degree were determined as no good.

Fig. 9 provides a table which lists the samples of glass panel P manufactured for this experiment according to their various displacement amounts of the end face of the upper glass sheet 1B relative to the end face of the lower glass sheet 1A.

Referring to the displacement amounts shown in Fig. 9, the values with the sign (+) each represents an amount of projection of the end face of the upper glass sheet 1B relative to the end face of the lower glass sheet 1A. The values with sign (-) each represents an amount of recession of the end face of the upper glass sheet 1B relative to the end face of the lower glass sheet 1A. The value '0' means that the end faces of the upper and lower glass sheets 1A, 1B are aligned with each other without any displacement.

The results of the experiment show that the sealing effect of the outer peripheral sealed portion 4 is good for those in which the end face of the lower glass sheet 1A projects by an amount of 2 mm or less from the end face of the upper glass sheet 1B.

### [other embodiments]

Next, other embodiments of the invention will be described.
<1> There are variety of applications of the glass panel relating to the present invention. For instance, the panel finds its applications in the field of building construction, vehicles (window shield of automobile, railway train or of a boat), various instruments (display panel of a plasma display device, a door or wall of a refrigerator or heat-insulating device), etc.
   Further, this glass panel is not limited to the one described in the foregoing embodiment in which the gap between the glass sheets is set under the depressurized condition of 0.13 Pa (1.0 x 10⁻³ Torr) or lower. The vacuum degree may vary, as desired. Or, the gap may be sealed under a substantially atmospheric pressure condition also.
<2> The glass sheets constituting the glass panel are not limited to those described in the foregoing embodiment having a thickness of 2.65 mm to 3. mm. The thickness of the glass sheets may be different. Further, the glass panel may be assembled from a combination of two glass sheets which differ in the thickness thereof from each other.
   The shape of the glass sheet is not limited to the rectangular shape described in the foregoing embodiments. It may be square or polygonal, circular, oblong or even other shapes having curved outer peripheries.
   Further, the type of glass may be chosen as desired. For instance, other various kinds of sheet glass such as figured glass sheet, frosted glass sheet (glass sheet with a surface treatment for providing light diffusing function), wire glass sheet, tempered glass sheet, a glass sheet capable of absorbing thermic rays or ultraviolet rays may be employed instead. Any of these types of glass sheets may be employed singly or in combination.
   Further, the composition of the glass sheets to be employed in the present invention is not particularly limited. Any composition used in the standard window pane such as soda lime silica glass, borosilicate glass, aluminosilicate glass, crystallized glass, etc. can be used.
<3> The material of the spacer 2 is not particularly limited to the Inconel alloy 718 employed in the foregoing embodiment. Instead, the spacer 2 may be formed of other various kinds of material such as other kinds of metal material like stainless steel, quartz glass, ceramic, glass, low-melting glass etc. What is essential here is that the spacer have high resistance against deformation under application of an external force thereto so as to prevent the two glass sheets from coming into contact with each other.
<4> The material forming the outer periphery sealed portion is not limited to the solder material 5A described in the foregoing embodiment. Instead, it may be one or more of tin, bismuth, lead, zinc, indium, antimon, etc. Further, one or more of silver, aluminum, copper, etc. may be added thereto.

The invention may be embodied in any other way than described above. The foregoing embodiment is not to limit the scope of the invention to the constructions shown in the accompanying drawings, but only to illustrate one preferred mode of embodying the invention. Further and other modifications will be readily made by one skilled in the art without departing from the scope of the invention set forth in the appended claims.

## Claims

1. A glass panel including a pair of glass sheets opposed to each other with a predetermined gap therebetween and having peripheral edges thereof bonded with a metal material to seal the gap air-tightly,
**characterized in that**
the glass sheets are disposed relative to each other with a displacement of 2 mm or less in maximum at respective corresponding end faces thereof along the glass panel surface.

2. The glass panel according to claim 1, **characterized in that** one of the pair of glass sheets has a dimension greater by 2 mm or less in maximum than the other glass sheet in both the length and width thereof, and the glass sheets are disposed with an outer edge of the one glass sheet being located in alignment with or outside an outer edge of the other glass sheet.

3. The glass panel according to claim 1, **characterized in that** the two glass sheets are of substantially same shape and same dimensions, with a projection amount at the respective outer edges thereof relative to a reference line being within ± 1mm and the two glass sheets are disposed with the respective outer edges thereof being substantially aligned with each other.

4. A method of manufacturing glass panel, the method including steps of disposing a pair of glass sheets in vertical opposition to each other with a predetermined gap therebetween and directly bonding peripheral edges of the glass sheets with molten metal material for sealing the gap air-tight;
**characterized in that**
the bonding step is effected so that the glass sheets are bonded at the peripheral edges thereof with a displacement of 2 mm or less along the glass panel surface relative to each other at the respective corresponding end faces.

5. The method according to claim 4, **characterized in that** the method further includes the step of providing the two glass sheets so that one of the glass sheets has a dimension greater by 2 mm or less in maximum than the other glass sheet in both the length and width thereof, and wherein the disposing step is effected such that the glass sheets are disposed with an outer edge of the lower glass sheet being located in alignment with or outside an outer edge of the upper glass sheet.

6. The method according to claim 4, **characterized in that** the method comprises the further steps of:
preparing the two glass sheets with substantially same shape and same dimensions; and
disposing the two glass sheets disposed with the respective outer edges thereof being substantially aligned with each other with a projection amount at the respective outer edges thereof relative to a reference line being within ± 1mm.
